# EUROPÄISCHE PATENTSCHRIFT

(11) **EP 0 611 427 B1**
(45) Veröffentlichungstag und Bekanntmachung des Hinweises auf die Patenterteilung: **28.02.1996**
(21) Anmeldenummer: 92922170.3
(22) Anmeldetag: 12.11.1992
(51) Int. Cl.: F16H 63/30

(54) **SCHALTEINRICHTUNG FÜR DIE SCHALTUNGSBETÄTIGUNG VON MEHRSTUFENSCHALTGETRIEBEN FÜR KRAFTFAHRZEUGE**
GEARSHIFTING ARRANGEMENT FOR ACTUATING MOTOR VEHICLE MULTI-SPEED GEARBOXES
SYSTEME DE CHANGEMENT DE VITESSE POUR LA COMMANDE DE BOITES DE VITESSES MULTI-ETAGEES DE VEHICULES AUTOMOBILES

(30) Priorität: 12.11.1991 DE 4137142
(43) Veröffentlichungstag der Anmeldung: 24.08.1994
(73) Patentinhaber: ZF FRIEDRICHSHAFEN Aktiengesellschaft, D-88038 Friedrichshafen (DE)
(72) Erfinder: MILBRADT, Gerhard, D-7990 Friedrichshafen 1 (DE); GAZYAKAN, Ünal, D-7990 Friedrichshafen (DE)
(86) Internationale Anmeldenummer: EP9202603
(87) Internationale Veröffentlichungsnummer: WO9310379

(56) Entgegenhaltungen:
- DE-B- 1 450 891
- DE-C- 653 127
- US-A- 2 649 813
- PATENT ABSTRACTS OF JAPAN, unexamined applications, M Sektion, Band 11, Nr. 392, 22. Dezember 1987; THE PATENT OFFICE JAPANESE GOVERNMENT siehe S. 158 M 653 Nr. 62-159 837 (ISEKI)

## Beschreibung

Die Erfindung bezieht sich auf Schalteinrichtungen für die Schaltungsbetätigung von Mehrstufenschaltgetrieben für Kraftfahrzeuge gemäß Oberbegriff des Anspruchs 1, bei welchem Elektromotoren zur Betätigung der Schaltpakete des Getriebes verwendet werden.

Bei den heutigen mehrstufigen Schaltgetrieben gibt es Schaltungseinrichtungen, die den Schaltkraftbedarf teilweise oder ganz aus fahrzeugeigenen Energiequellen decken. Bisher nutzte man hierzug Pneumatik- oder Hydraulikeinrichtungen. Diese haben den Nachteil, daß keine einfache Steuerung der Schaltkraft möglich ist (speziell Pneumatik) oder aber relativ teure Bauteile notwendig sind. Ebenfalls sind diese Energiequellen nicht in jedem Fahrzeug verfügbar, müßten also bei Bedarf zusätzlich installiert werden.

Als in jedem Fahrzeug vorhandene Energiequelle bietet sich das elektrische Bordnetz an, das eine Vielzahl von Aufgaben im Fahrzeug erfüllt. Eine Modifikation für die Belange der Getriebeschaltung ist relativ leicht möglich. Der Trend in modernen Fahrzeugen geht zur elektronischen Steuerung von Fahrzeugfunktionen (z. B. Automatgetriebe, Einspritz- und Zündanlage, ABS). Es erscheint sinnvoll, den Steuerungsbereich und den Leistungsbereich mit der gleichen Energie zu versorgen. Bei einem elektrisch geschalteten Getriebe bedeutet dies, daß ein unnötiger Wechsel der Energieart im System von Schaltungssteuerung und Schaltkrafterzeugung vermieden wird. Vorteile sind hier z. B. bei der weg- und zeitabhängigen Steuerung der Schaltkraft zu sehen.

Derartige Schalteinrichtungen sind in verschiedensten Ausführungen bekannt. Allen ist jedoch gemeinsam, daß sie zur Betätigung eines jeden Schaltpaketes einen separaten Elektromotor verwenden, wodurch zumeist eine relativ komplexe Bauweise gekoppelt mit verhältnismäßig großem Platzbedarf, vorhanden ist.

So zeigen die US-PS 2,462,779 und US-PS 2,754,692 eine Getriebeschalteinrichtung bei der jeder Schaltschwinge ein Elektromotor zugeordnet ist, an dessen Welle eine Kugelgewindespindel (räumliches Getriebe) befestigt ist, die mit einem relativ komplexen Winkelhebel-Spiralfeder-System zusammenwirkt. Bei einem Sechsganggetriebe sind infolgedessen drei Elektromotoren angeordnet, mit drei Bewegungsübertragungseinrichtungen, wobei insbesondere letztere durch eine relativ vielteilige, komplexe Bauweise insgesamt zu hoher komplexität und großem Platzbedarf führen.

Desweiteren sind Schaltreinrichtungen bekannt, bei denen Schneckentriebe Verwendung finden. An dem jeweiligen, einer Schaltschwinge zugeordneten Elektromotor, ist eine Schnecke im wesentlichen koaxial zur Motorwelle angeordnet bzw. an dieser befestigt, die mit einem Schneckenrad und einem komplexen Hebelsystem zusammenwirkt. So zeigt die AT-PS 262 791 einen Schneckentrieb, der mit einem Kurbeltrieb zusammenwirkt, der seinerseits die Schaltschwinge bewegt. In der Schalteinrichtung nach EP-A 0 198 111, deren Merkmale den Oberbegriff des Anspruchs 1 bilden, wirkt das Schneckenrad mit einer im wesentlichen parallel zur Getrieberäderachse angeordneten Zahnstange zusammen, die wiederum über ein Hebel-Feder-System die Schaltschwinge betätigt.

Desweiteren sind Schalteinrichtungen bekannt, die jeweils Elektromotoren in Verbindung mit Nocken- bzw. Kurvenscheiben verwenden, wobei zwischen Motor und Kurvenscheibe bzw. Nocke jeweils ein Untersetzungsgetriebe angeordnet ist. So zeigt die GB-A 2097077 eine Schalteinrichtung, bei der die Nocke eine gegen Federkraft arbeitende Schiebereinrichtung betätigt, die ihrerseits das mit einer Kugel versehene Ende der Schaltschwinge bewegt. Zudem zeigt die DE-OS 28 06 904 eine Schalteinrichtung, bei der jeweils eine Kurvenscheibe mit stirnseitig vorgesehenen Steuerkurven vorgesehen ist. Durch eine Führungsrolle in Verbindung mit Hilfshebel, Betätigungshebel und Kurbelarme werden über Klauen die Schieberadblöcke bewegt.

Aufgabe der Erfindung ist es, eine Schalteinrichtung gemäß dem Oberbegriff des Anspruchs 1 anzugeben, die einfach und platzsparend im Aufbau und sicher ist, sich wirtschaftlich fertigen und einfach montieren läßt.

Diese Aufgabe wird erfindungsgemäß durch eine Schalteinrichtung mit den Merkmalen des Anspruchs 1 gelöst. Vorteilhafte Ausgestaltungen sind in den Unteransprüchen beschrieben.

Demgemäß weist die erfindungsgemäße Schalteinrichtung zur Betätigung sämtlicher Schaltpakete nur einen Elektromotor auf, in Verbindung mit nur einem Kurvengetriebe und nur einem Schaltelement. Damit wird eine Reduzierung auf ein Minimum an Bauteilen vorgenommen, wobei insbesondere viel Platz einnehmende Bauteile, wie Elektromotoren, bis auf einen einzigen, entfallen (unabhängig von der Anzahl der vorhandenen Gangschaltpakete). Eine kompakte Baugruppe wird hiermit erhalten die es erlaubt, ein relativ kleines Motormoment zum Antrieb zu nutzen, da hohe Stellkräfte erzielt werden können. Zudem kann durch den Elektromotor das Drehmoment einfach über den Motorstrom gesteuert werden.

In Weiterbildung des Erfindungsgedankens besteht das Schaltelement aus einer im wesentlichen parallel zur Räderachse verschiebbaren Schubstange und mehreren, jeweils den Schaltschwingen zugeordneten, einzeln betätigbaren Koppelmechanismen, die jeweils in betätigtem Zustand eine triebliche Verbindung zwischen Schubstange und einer der Schaltschwingen herstellen. Dabei ist weiter von Vorteil, wenn das räumliche Kurvengetriebe, das koaxial zu der Elektromotorwelle angeordnet ist, eine Gewindespindel mit darauf laufendem Gewindemutter ist. Durch die koaxiale Anordnung, also die achsgleiche Ausrichtung des Elektromotors mit Gewindespindel und Schubstange, wird eine sehr platzsparende, einfache Konstruktion bereitgestellt, die ohne größere Probleme im Inneren des Getriebegehäuses anordbar ist.

Gemäß einer weiteren, vorteilhaften Ausgestaltung ist das Kurvengetriebe über eines seiner beiden Teile mit der Schubstange fest verbunden, wodurch die koaxiale Ausrichtung der wesentliche Bestandteile der Schalteinrichtung zueinander einfach realisierbar ist.

Dabei kann die Gewindspindel mit der Schubstange zu einem im wesenlichen einstückigen Bauteil verbunden sein, während die Gewindemutter mit der Motorwelle drehfest und axial unverschieblich verbunden ist. Hierdurch besteht beispielsweise die Möglichkeit, an dem motorseitigen Ende der Schubstange ein entsprechendes Gewinde aufzubringen, auf dem die Gewindemutter läuft. Selbstverständlich kann das Gewinde direkt an der Schubstange eingebracht sein oder es kann ein separates Gewindeteil gefertigt werden, das mit der Profilstahl-Schubstange in bekannter Weise einstückig verbunden ist. Dabei können der Gewindespindel, d. h. hier der Schubstange mit daran vorgesehenem Gewindeteil, zwei im wesentlichen gegenläufig arbeitende Kupplungsvorrichtungen zugeordnet sein. Zur Erzeugung der Schaltkraft (Stellbewegung) ist die Gewindespindel/ Schubstange undrehbar, jedoch axial verschiebbar mit dem Gehäuse verbunden bzw. gekuppelt, während zur Gangwahl, d. h. zur Aktivierung des jeweiligen Schaltpakets, die Gewindespindel/ Schubstange mit der Gewindemutter/Motorwelle drehfest, und axial unverschiebbar verbindbar ist. Wird folglich die erste Kuppelmechanik, d. h. die Kupplung, die die Gewindespindel mit der Motorwelle drehfest verbindet, geöffnet und gleichzeitig die zweite Kuppelmechanik, d. h. die Kupplung, die die Gewindespindel unverdrehbar, jedoch axial verschieblich macht, geschlossen, dann wird je nach Drehbewegung der Motorwelle über die mit der Motorwelle mitrotierende Gewindemutter die Gewindespindel axial verschoben, wodurch die Stellbewegung (Schaltbewegung) durchgeführt wird. Werden die beiden Kupplungsmechanismen entgegengesetzt aktiviert, also die erste Kupplung geschlossen (drehfeste Verbindung der Gewindespindel mit der Motorwelle) und die zweite Kupplungsmechanik geöffnet (die Gewindespindel zur Rotation freigegeben) dann kann die Gewindespindel die Rotationsbewegungen des Motors mitmachen, d. h. sie kann entsprechende Winkel-Stellbewegungen (Gangwahl) durchführen. Hierdurch besteht die Möglichkeit, die Gangwahl durch diese Drehbewegungen der Gewindespindel, d. h. der Schubstange, durch eine entsprechende Gangschalteinrichtung, die auf bestimmte Winkelvorgaben anspricht, durchzuführen. Es wird folglich ein sehr wichtiger Vorteil erreicht, nämlich daß mit ein und demselben Bauteil, also der Schubstange in Verbindung mit nur einem Motor, d. h. einem einzigen Stellmechanismus, sowohl die Stellbewegung (Schaltkraft), als auch die Gangwahl in einfacher Weise durchgeführt werden kann.

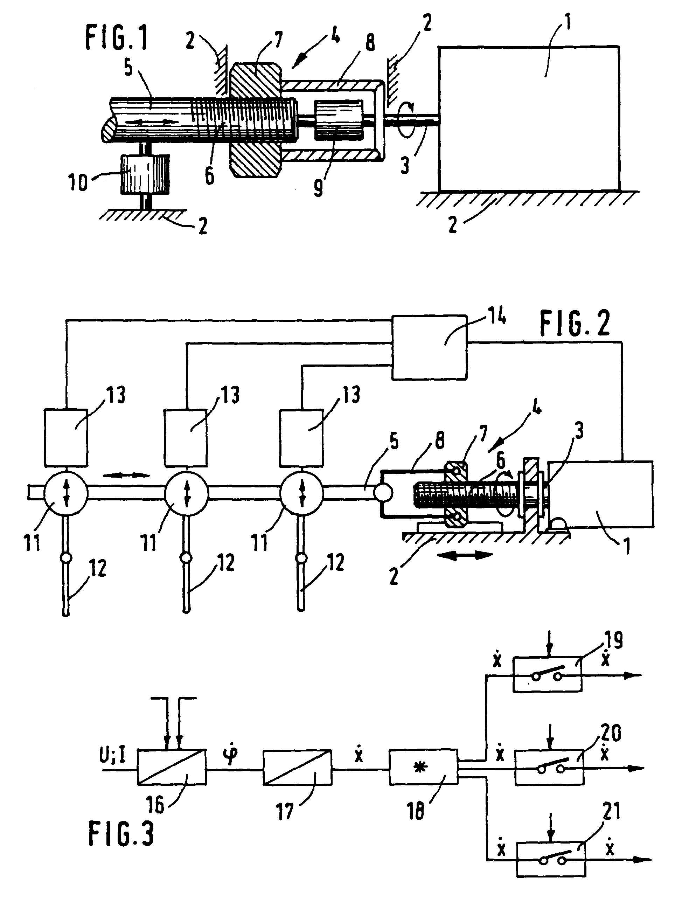

Gemäß einer Weiterbildung des Erfindungsgedankens kann die Schubstange mit der Gewindemutter dreh- und verschiebefest verbunden sein, wobei die Gewindemutter axial verschiebbar ist, sich jedoch nicht mit der mit der Gewindespindel versehenen Motorwelle mit dreht. Durch entsprechende Rotationsbewegungen der Motorwelle wird die Mutter und damit die Schubstange axial verschoben, und die notwendige Stellbewegung durchgeführt. Selbstverständlich besteht auch umgekehrt die Möglichkeit, ähnlich wie in Fig. 1, den Gewindespindelteil fest verbunden mit der Schubstange vorzusehen, während die Gewindemutter an der Motorwelle vorgesehen ist, beispielsweise durch Ausbildung der Welle als Hohlwelle. Bei dieser Ausführungsform muß keine zusätzliche Führung eines der beiden Teile des räumlichen Kurvengetriebes vorgenommen werden, da diese Führung bereits an der Schubstange vorgesehen, an der die Gewindespindel befestigt ist. Bei dieser Ausführungsform können der Schubstange zur Durchführung der Gangwahl mehrere, jeweils einer Schaltschwinge zugeordnete, einzel betätigbare Koppelmechanismen zugeordnet sein, die die Schaltschwingen einzeln an der Stange oder am Getriebegehäuse festsetzen. Die Kuppelmechanismen setzen in unbetätigtem Zustand, also wenn keine Koppelkraft wirksam ist, jeweils eine unbetätigte Schaltschwinge in ihrer Neutralstellung an einem gehäusefesten Teil unbeweglich fest, wobei gleichzeitig die Schubstange ungehindert die Schaltbewegungen durchführen kann. Hierdurch kann eine Bewegung der Schaltschwingen, die zu einem unbeabsichtigten Einlegen eines Ganges führen, nicht stattfinden. In betätigtem bzw. eingerücktem Zustand stellen die einzeln betätigbaren Koppelmechanismen eine triebliche Verbindung zwischen der Schubstange und jeweils einer Schaltschwinge her, wobei gleichzeitig die Verbindung der Schaltschwinge mit dem gehäusefesten Teil gelöst wird, so daß die Schaltschwinge die Schaltbewegungen der Schubstange ungehindert durchführen kann. Die mehreren Schaltschwingen des mehrstufigen Kfz-Getriebes werden folglich einzeln an eine einzige schaltkraftübertragende Schubstange angekoppelt. Der Ankoppelmechanismus ist so gestaltet, daß jeder Koppelmechanismus unabhängig von den übrigen betätigt werden kann, dabei jedoch auf die gleiche Schubstange zugreift, die für die Betätigung der restlichen Schaltschwingen zur Verfügung steht.

In Weiterbildung des Erfindungsgedankens ist der Koppelmechanismus senkrecht zur Schaltbewegung der Schubstange wirkend ausgebildet und ist über Elektromagneten oder pneumatische oder hydraulische Zylinder oder andere Mechanismen enthaltende Betätigungseinrichtungen aktivierbar. Es ist selbstverständlich, daß bei Verwendung eines Elektromotors zur Betätigung der Schubstange, auch die Betätigung der Koppelmechanismen über Elektromagnete vorzuziehen ist. Dabei können auch die elektronischen Steuereinheiten, die Stellbewegung und Gangwahl steuern, zu einer Einheit zusammengefaßt werden.

Erfindungsgemäß ist von Vorteil, daß die Steuerung des Schaltmechanismus über eine Elektronik erfolgt. Der Motor zur Stellbewegung und Stellkrafterzeugung kann in Abhängigkeit vom jeweiligen Gang, der eingelegt werden soll, gesteuert werden. Auch kann die Steuerung des Gangwahlmechanismus über eine Elektronik erfolgen. Durch diese wird der gleiche Motor, der zur Stellkrafterzeugung verwendet wird in Abhängigkeit von der Wahl des jeweiligen Schaltpakets, gesteuert werden. Dabei ist davon auszugehen, daß die elektronische Steuerung entsprechend den beiden Grundausführungsformen des Erfindungsgedankens auszulegen ist, d. h. im ersten Ausfertigungsfall, daß durch die Elektronik, für beide Funktionen, jeweils der Elektromotor so gesteuert wird, daß seine Welle sowohl die für die Stellbewegung als auch die für die Gangwahl notwendigen Bewegungen ausführt, wobei bei letzterer zudem noch das Ein-und Ausschalten der Kupplungsmechanismen mitgesteuert werden muß. Bei der zweiten Ausführungsform wird der Elektromotor lediglich die für die Stellbewegung der Schubstange notwendige Rotation durchführen, während die Betätigung der Koppelmechanismen zwar separat, jedoch rückgekoppelt mit der Motorsteuerung, durchgeführt wird.

Nachfolgend wird die Erfindung anhand zweier Ausführungsbeispiele unter Bezug auf die Zeichnung näher erläutert. Es zeigt:
- Fig. 1: eine schematische Darstellung der Schalteinrichtung in erster Ausführung,
- Fig. 2: eine schematische Darstellung der Schalteinrichtung in zweiter Ausführung, und
- Fig. 3: eine Grundoperationsstruktur, nach der sich die beiden Mechanismen der erfindungsgemäßen Schalteinrichtung gemäß Fig. 1 und 2 orientieren.

Als einer der wesentlichsten Bestandteile der erfindungsgemäßen Schalteinrichtung ist ein Elektromotor 1 vorgesehen, der an dem Getriebegehäuse oder einem mit dem Getriebegehäuse fest verbundenen Teil 2 befestigt ist. Die Motorwelle 3 ist mit einem räumlichen Kurvengetriebe 4 trieblich verbunden, das wiederum mit der Schubstange 5 in trieblicher Verbindung steht. Dabei sind Motorwelle 3, Getriebe 4 und Schubstange 5 koaxial ausgerichtet, wodurch die Stellbewegung der Schubstange praktisch in Achsrichtung der Motorwelle 3 stattfindet. Das räumliche Kurvengetriebe 4 besteht dabei aus einer Gewindespindel 6, auf der eine Gewindemutter 7 läuft.

In dem Ausführungsbeispiel nach Fig. 1 ist die Gewindespindel 6 am motorseitigen Ende der Schubstange 5 so befestigt, daß sie ein einteiliges Bauteil bilden. Man kann hier von einem Gewindespindel-Teil der Schubstange sprechen. Die Gewindemutter 7 ist mit der Motorwelle 3 beispielsweise über mehrere starre Verbindungsarme 8 oder ein flanschähnliches Teil oder eine sonstige, den Abstand zwischen den Stirnseiten von Gewindespindel und Motorwelle überbrückende Konstruktion, verbunden. Dabei wird die Gewindemutter 7 am Gehäuse bzw. an mit dem Gehäuse fest verbundenen Teilen 2 verschiebefest, jedoch drehbar festgehalten.

Der Gewindespindel 6 sind zwei Kupplungsmechaniken 9, 10 zugeordnet. Die erste Kupplungsmechanik 9 ist im wesentlichen zwischen den Stirnseiten von Gewindespindel 6 und Motorwelle 3 angeorndet und verbindet diese, so daß die Gewindespindel 6 mit Mutter 7 und Welle 3 unbeweglich festgesetzt ist bzw. löst diese Verbindung. Die zweite Kupplungsimechanik 10 verbindet die Gewindespindel 6 mit dem Gehäuse bzw. einem Gehäuseteil 2 derart, daß die Gewindespindel keine Drehbewegung, sondern nur noch eine translatorische Bewegung durchführen kann. Die beiden Kupplungsmechaniken 9 und 10 arbeiten gegenläufig, d. h. wenn Kupplung 9 geöffnet ist, ist Kupplung 10 geschlossen oder umgekehrt.

Die Schalteinrichtung gemäß Fig. 1 funktioniert folgendermaßen: Bei offener Kupplung 9 und geschlossener Kupplung 10 wird das Drehmoment des Elektromotors 1 über Welle 3 und Verbindungsarm 8 an die Gewindemutter 7 übertragen, d. h. die Mutter 7 dreht sich gemeinsam mit der Welle 3. Da die Mutter 7 jedoch an einer axialen Bewegung gehindert ist, wird durch ihre Rotation die Gewindespindel 6 eine entsprechende translatorische Bewegung durchführen, da die Kupplungsmechanik 10 sie an einer Rotationsbewegung hindert und nur eine axiale Verschiebebewegung gestattet. Mit der Gewindespindel 6 verschiebt sich auch die Schubstange 5, mit der dann die angekoppelten Schaltschwingen bewegt.

Wird nun Kupplung 9 geschlossen und Kupplung 10 gleichzeitig geöffnet, dann wird die Gewindespindel 6 und damit die Schubstange 5 mit der Welle 3 dreh- und verschiebefest verbunden, also das räumliche Kurvengetriebe 4 kurzgeschlossen, so daß die Schubstange 5 die Drehbewegungen der Welle 3 voll mitmacht. An der Schubstange 5 sind eine der Anzahl der Gangschaltpakete entsprechende Anzahl von Koppelmechanismen vorgesehen, die auf bestimmte Verdrehwinkel der Schubstange ansprechen und die entsprechende Schaltschwinge mit der Schubstange auf Mitnahme verbinden.

Bei dem Ausführungsbeispiel gemäß Fig. 2 ist die Gewindespindel 6 des räumlichen Kurvengetriebes 4 direkt an der Welle 3 koaxial befestigt, bzw. kann Teil der Welle 3 sein, durch Einbringung eines entsprechenden Gewindes in den entsprechenden Wellenzapfen. Die Gewindemutter 7 ist über Verbindungsarme oder ähnliche Bauteile, wie unter Fig. 1 beschrieben, mit der Schubstange 5 achsfluchtend dreh-und verschiebefest verbunden. Gleichzeitig ist Mutter 7 jedoch am Gehäuse 2, bzw. an mit dem Gehäuse fest verbundenen Bauteilen, drehfest und gleichzeitig axial verschieblich angeordnete. Selbstverständlich besteht auch umgekehrt die Möglichkeit, ähnlich wie in Fig. 1, den Gewindespindelteil fest verbunden mit der Schubstange 5 vorzusehen, während die Gewindemutter an der Motorwelle 3 vorgesehen ist, beispielsweise durch Ausbildung der Welle als Hohlwelle. Bei dieser Ausführungsform muß keine zusätzliche Führung eines der beiden Teile des räumlichen Kurvengetriebes vorgenommen werden, da diese Führung bereits an der Schubstange vorgesehen, an der die Gewindespindel befestigt ist.

An der Stange 5 sind quer zur Verschieberichtung der Stange 5 wirksame Koppelmechanismen 11 vorgesehen, die die entsprechenden Schaltschwingen 12 mit der Schubstange 5 jeweils verbinden. Einem jeden Koppelmechanismus 11 und damit einer jeden Schaltschwinge 12 ist eine Betätigungseinrichtung 13 zugeordnet, die den Koppelmechanismus zur Einkopplung bringt bzw. aus dem Einkoppelzustand mit der Schubstange herausbewegt und die Schaltschwinge mit dem Getriebegehäuse unbeweglich verbindet, gleichzeitig die Schubstange freigebend. Die Betätigungseinrichtungen sind hier elektromagnetische Einrichtungen, die über eine elektronische Steuereinheit einzeln nach Bedarf eingeschaltet werden. Die Steuereinheit 14 ist mit der Steuereinheit des Elektromotors verbunden, bzw. kann gleichzeitig die Steuereinheit für den Elektromotor 1 enthalten.

Die Schalteinrichtung nach Fig. 2 funktioniert folgendermaßen: Wird ein bestimmter Gang eingelegt, dann wird über die elektronische Steuereinheit 14 die dem entsprechenden Gangschaltpaket bzw. einer der Schaltschwingen 12 zugeordnete Betätigungseinrichtung 13 angesprochen, die ihrerseits den entsprechenden Koppelmechanismus 11 betätigt und damit die angewinkelte Schaltschwinge 12 mit der Schaltlanze 5 mitnehmend verbindet. Die beiden übrigen Betätigungseinrichtungen sind nicht angesprochen, so daß deren Koppelmechanismen 11 die entsprechenden Schaltschwingen 12 aus der trieblichen Verbindung mit der Schubstange 5 löst und am Getriebegehäuse stillsetzt. Danach wird der Elektromotor angesprochen, der, je nachdem welcher der beiden Gänge des angesprochenen Schaltpaketes geschaltet werden, muß die entsprechende Rotation der Welle 3 und damit der Gewindespindel 6 in Uhrzeigersinn oder Gegenuhrzeigersinn veranlaßt. Durch die Drehung der Gewindespindel wird die verdrehfest gehaltene Gewindemutter 7 eine translatorische Bewegung, in der Zeichnungsebene gesehen, nach links oder rechts ausführen. Dadurch führt die mit der Mutter 7 verbundene Schubstange 5 über die angekoppelte Schaltschwinge 12 eine entsprechende Verschwenkbewegung durch und bewegt eine, hier nicht dargestellte entsprechende Schaltmuffe zur Einkopplung des dem gewählten Gang entsprechenden Räderpaares.

In Fig. 3 ist eine Grundoperationsstruktur dargestellt, nach der sich der Mechanismus der erfindungsgemäßen Schalteinrichtung orientiert. Bei 16 und 17 findet ein Wandeln statt, wobei die Umsetzung der elektrischen Energie in mechanische Energie mit Hilfe des Elektromotors 1 stattfindet. Bei 16 findet eine Wandlung in Rotationsbewegung statt, wobei gleichzeitig eine Drehmomentsteuerung und eine Drehrichtungssteuerung hier einfließt. Unter 17 findet die Wandlung in eine translatorische Bewegung statt, die die Umwandlung der Rotationsbewegung der Motorwelle in die Schalt-/Stellbewegung der Schubstange darstellt. 18 zeigt das Verzweigen, hier in drei Zweige, die den drei Koppelmechanismen gemäß Fig. 2 entsprechen. Hier wird die translatorische Bewegung an drei Mechanismen 19, 20, 21 weitergegeben, die über entsprechende Koppel-/Entkopplungssignale einzeln zuschaltbar sind. Es ist zu erkennen, daß die Operationen im wesentlichen linear aufeinanderfolgend ablaufen und eine Verzweigung praktisch nur im letzten bzw. vorletzten Glied stattfindet.

### Bezugszeichenliste

- 1.: Elektromotor
- 2.: Gehäuse/-teil
- 3.: Motorwelle
- 4.: räumliches Kurvengetriebe
- 5.: Schubstange
- 6.: Gewindespindel
- 7.: Gewindemutter
- 8.: Verbindungsarme
- 9.: erster Kupplungsmechanismus
- 10.: zweiter Kupplungsmechanismus
- 11.: Koppelmechanismus
- 12.: Schaltschwinge
- 13.: Betätigungseinrichtung
- 14.: elektronische Steuereinheit
- 15.: ----------
- 16.: Wandeln
- 17.: Wandeln
- 18.: Verzweigen
- 19.: Koppeln/Entkoppeln
- 20.: Koppeln/Entkoppeln
- 21.: Koppeln/Entkoppeln

## Patentansprüche

1. Schalteinrichtung für die Schaltungsbetätigung von Mehrstufenschaltgetrieben für Kraftfahrzeuge,
- mit einem Elektromotor (1) zur Erzeugung der Schaltkraft/Schaltbewegung einer Schaltschwinge (12) des Getriebes,
- mit einer Schubstange (5),
- mit einem räumlichen Kurvengetriebe (4), das im wesentlichen achsfluchtend mit dem Elektromotor (1) verbunden ist
- und mit einem Schaltelement, das zwischen dem Kurvengetriebe (4) und der Schaltschwinge (12) wirksam ist,
dadurch **gekennzeichnet**,
- daß zur Schaltung sämtlicher von mehreren Schaltschwingen (12) nur ein Elektromotor (1) in Verbindung mit nur einem Kurvengetriebe (4) und nur einem Schaltelement bzw. nur einer Schubstange (5) vorgesehen sind und
- daß das Schaltelement aus der im wesentlichen parallel zur Räderachse verschiebbaren Schubstange (5) und mehreren, jeweils den Schaltschwingen (12) zugeordneten, zur Gangwahl einzeln betätigbaren Koppelmechanismen (11) besteht, die jeweils in betätigtem Zustand eine triebliche Verbindung zwischen Schubstange (5) und einer der Schaltschwingen (12) herstellen.

2. Schalteinrichtung nach Anspruch 1, **dadurch gekennzeichnet,** daß das räumliche Kurvengetriebe (4) eine Gewindespindel (6) mit darauf laufender Gewindemutter (7) ist.

3. Schalteinrichtung nach Anspruch 2, **dadurch gekennzeichnet,** daß das Kurvengetriebe (4) über eines seiner beiden Teile (6, 7) mit der Schubstange (5) dreh- und verschiebefest verbunden ist.

4. Schalteinrichtung nach Anspruch 3, dadurch **gekennzeichnet**, daß die Gewindespindel (6) mit der Schubstange (5) zu einem im wesentlichen einteiligen Bauteil verbunden ist, während die Gewindemutter (7) mit der Motorwelle (3) drehfest und axial unverschieblich verbunden ist.

5. Schalteinrichtung nach Anspruch 4, dadurch **gekennzeichnet**, daß der Gewindespindel (6) zwei im wesentlichen gegenläufig arbeitende Kupplungsvorrichtungen zugeordnet sind, durch die
- zur Erzeugung der Schaltkraft/-Bewegung die Gewindespindel/Schubstange (6, 5) undrehbar, jedoch axial verschiebbar mit Gehäuse (2) verbindbar ist, und
- zur Gangwahl die Gewindespindel/Schubstange (6, 5) mit der Gewindemutter/Motorwelle (7, 3) drehfest, jedoch axial unverschiebbar verbindbar ist.

6. Schalteinrichtung nach Anspruch 3, dadurch **gekennzeichnet**, daß die Schubstange (5) der mit dem Gehäuse (2) axial verschiebbaren und gleichzeitig unverdrehbar verbundenen Gewindemutter (7) befestigt ist, während die Gewindespindel (6) an der Motorwelle (3) befestigt ist.

7. Schalteinrichtung nach Anspruch 4 bzw. 6, dadurch **gekennzeichnet**, daß zur Durchführung der Gangwahl der einen Schubstange (5) mehrere, jeweils mit einer Schaltschwinge zusammenwirkende, einzeln betätigbare Koppelmechanismen (11) zugeordnet sind, die die Schaltschwingen (12) einzeln an der Schubstange (5) oder am Getriebegehäuse (2) festsetzen.

8. Schalteinrichtung nach Anspruch 7, dadurch **gekennzeichnet**, daß die Koppelmechanismen (11) senkrecht zur Schaltbewegung der Schubstange (5) wirkend ausgebildet sind und über elektrische, elektromagnetische, pneumatische oder hydraulische Einrichtungen enthaltende Befestigungseinrichtungen (13) aktiviert werden.

9. Schalteinrichtung nach Anspruch 7, dadurch **gekennzeichnet**, daß die Koppelmechanismen (11) jeweils durch Drehen der Schubstange/Gewindespindel (5, 6) betätigbare Mechanismen sind, die je nach Verdrehwinkel der Schubstange (5) eine der Schaltschwingen (12) mit der Stange festsetzen.

10. Schalteinrichtung nach Anspruch 1, dadurch **gekennzeichnet**, daß dem Elektromotor (1) jeweils mindestens eine elektronische Steuerung (14) für die Steuerung der Schaltbewegung, der Schaltkraft und der Gangwahl zugeordnet ist.

## Claims

1. Shifting device for gearshift operation of multistage gearboxes for motor vehicles,
- with an electric motor (1) for generating the shifting force/movement of a shift rocker (12) of the gearbox,
- with a push rod (5),
- with a spatial cam mechanism (4) connected to the electric motor (1) so as to be substantially axially aligned
- and with a shifting element which comes into operation between the cam mechanism (4) and the shift rocker (12),
characterised in that
- with a view to shifting all of several shift rockers (12) only one electric motor (1) in conjunction with only one cam mechanism (4) and only one shifting element or only one push rod (5) are provided and
- the shifting element consists of the push rod (5) which is capable of being displaced substantially parallel to the wheel axle and several coupling mechanisms (11) which are each assigned to the shift rockers (12) and which are capable of being operated individually with a view to gear selection and which in the actuated state each establish a drive connection between the push rod (5) and one of the shift rockers (12).

2. Shifting device according to Claim 1, characterised in that the spatial cam mechanism (4) is a threaded spindle (6) with a threaded nut (7) running thereon.

3. Shifting device according to Claim 2, characterised in that the cam mechanism (4) is connected via one of its two parts (6, 7) to the push rod (5) in such a way as to prevent rotation or displacement.

4. Shifting device according to Claim 3, characterised in that the threaded spindle (6) is connected to the push rod (5) so as to constitute a substantially integral component, whereas the threaded nut (7) is connected to the motor shaft (3) in such a way as to prevent rotation or axial displacement.

5. Shifting device according to Claim 4, characterised in that two coupling devices operating in substantially opposing manner are assigned to the threaded spindle (6), by means of which coupling devices
- with a view to generating the shifting force/movement the unit (6, 5) constituted by the threaded spindle and push rod is capable of being connected to the casing (2) in such a way as to be incapable of rotation but capable of axial displacement, and
- with a view to gear selection the threaded spindle / push rod (6, 5) is capable of being connected to the threaded nut / motor shaft (7, 3) in such a way as to prevent rotation but to be incapable of axial displacement.

6. Shifting device according to Claim 3, characterised in that the push rod (5) is fixed to the threaded nut (7) which is connected to the casing (2) in such a way as to be capable of axial displacement and at the same time incapable of rotation, whereas the threaded spindle (6) is fixed to the motor shaft (3).

7. Shifting device according to Claim 4 or 6, characterised in that with a view to implementing the gear selection several individually operable coupling mechanisms (11) each interacting with a shift rocker are assigned to the one push rod (5), whereby said coupling mechanisms attach the shift rockers (12) individually to the push rod (5) or to the gearbox casing (2).

8. Shifting device according to Claim 7, characterised in that the coupling mechanisms (11) are designed to act perpendicularly to the shifting movement of the push rod (5) and are activated via fixing devices (13) including electrical, electromagnetic, pneumatic or hydraulic devices.

9. Shifting device according to Claim 7, characterised in that the coupling mechanisms (11) are mechanisms which in each case are capable of being operated by rotation of the unit (5, 6) constituted by the push rod and threaded spindle and which, depending on the angle of rotation of the push rod (5), attach one of the shift rockers (12) to the rod.

10. Shifting device according to Claim 1, characterised in that in each case at least one electronic control device (14) for controlling the shifting movement, the shifting force and the gear selection is assigned to the electric motor (1).

## Revendications

1. Système de changement de vitesse pour la commande de boîtes de vitesses multi-étages de véhicules automobiles, comportant :
- un moteur électrique (1) pour générer la force de changement de vitesse, le déplacement de changement de vitesse d'un levier oscillant (12) de la boîte de vitesses.
- une tringle de poussée (5),
- une boîte d'entraînement spatiale (4) couplée à l'arbre d'entraînement du moteur électrique (1), et
- un élément de commande du changement de vitesse couplé entre la boîte d'entraînement spatiale (4) et le levier oscillant (12),
**caractérisé** en ce que :
- pour la commande d'un ou de plusieurs leviers oscillants (12), seul un moteur électrique (1) est couplé à une seule boîte d'entraînement spatiale (4), et seul un élément de commande du changement de vitesse, respectivement seule une tringle de poussée (5), sont prévus, et
- en ce que l'élément de commande de changement de vitesse est constitué d'une tringle de poussée (5) mobile sensiblement parallèlement à l'axe des roues et de plusieurs mécanismes d'embrayage (11) respectivement associés aux leviers oscillants (12) pour la sélection des vitesses, ces mécanismes assurant un accouplement positif entre la tringle de poussée (5) et un des leviers oscillants (12) lorsqu'ils sont activés.

2. Système de changement de vitesse selon la revendication 1, **caractérisé** en ce que la boîte d'entraînement spatiale (4) est constituée d'un axe fileté (6) sur lequel est monté un écrou (7).

3. Système de changement de vitesse selon la revendication 2, **caractérisé** en ce que la boîte d'entraînement spatiale (4) est couplée par l'intermédiaire d'un de ses deux composants (6, 7) à la tringle de poussée (5) et est agencée pour ne pas coulisser.

4. Système de changement de vitesse selon la revendication 3, **caractérisé** en ce que l'axe fileté (6) est couplé avec une tringle de poussée (5) au moyen d'une pièce unitaire, alors que l'écrou (7) est couplé à l'arbre moteur (3) de façon à être bloqué en rotation et non coulissant.

5. Système de changement de vitesse selon la revendication 4, **caractérisé** en ce que l'axe fileté (6) est associé à deux embrayages travaillant en opposition, ces embrayages étant agencés pour
- générer la force de changement de vitesse/-le déplacement de changement de vitesse de l'axe fileté/ la tringle de poussée (6,5) bloqué en rotation tout en autorisant leur déplacement axial avec le boîtier (2), et
- sélectionner les vitesses, l'axe fileté/la tringle de poussée (6, 5) étant couplé et solidaire en rotation avec l'écrou/l'axe moteur (7, 3) tout en n'autorisant pas un déplacement axial.

6. Système de changement de vitesse selon la revendication 3, **caractérisé** en ce que la tringle de poussée (5) de l'écrou (7) est liée au boîtier (2) de manière à se déplacer axialement sans tourner, alors que l'axe fileté (6) est couplé à l'arbre moteur (3).

7. Système de changement de vitesse selon la revendication 4 ou 6, **caractérisé** en ce que, pour la sélection des vitesses, une tringle de poussée (5), plusieurs mécanismes d'embrayage (11) sont respectivement associés à un levier oscillant, ces mécanismes d'embrayage fixant les leviers oscillants (12) individuellement à la tringle de poussée (5) ou au boîtier (2).

8. Système de changement de vitesse selon la revendication 7, **caractérisé** en ce que les mécanismes d'embrayage (11) sont agencés pour agir perpendiculairement par rapport au déplacement de la tringle de poussée (5) et sont activés par l'intermédiaire d'installations de maintien ou de positionnement (13) élastiques, électromagnétiques, pneumatiques ou hydrauliques.

9. Système de changement de vitesse selon la revendication 7, **caractérisé** en ce que les mécanismes d'embrayage (11) sont constitués par des mécanismes activés par la rotation de la tringle de poussée/l'axe fileté (5, 6), ces mécanismes étant conçus pour lier un des leviers oscillants (12) à la tringle de poussée (5) selon l'angle de rotation de cette dernière.

10. Système de changement de vitesse selon la revendication 1, **caractérisé** en ce que le moteur électrique (1) est associé à une commande électronique (14) pour la commande du mouvement de changement de vitesse, de la force de changement et de la sélection de vitesse.
